# EUROPEAN PATENT SPECIFICATION

(11) **EP 1 164 050 B1**
(45) Date of publication and mention of the grant of the patent: **06.04.2005**
(21) Application number: 01103806.4
(22) Date of filing: 16.02.2001
(51) Int. Cl.: B60N 2/36

(54) **Seat mounting structure for a motorcar**
Sitzeinbaustruktur für einen Kraftfahrzeug
Structure de montage de siège pour une automobile

(30) Priority: 09.06.2000 JP 2000173179
(43) Date of publication of application: 19.12.2001
(73) Proprietor: Daihatsu Motor Co., Ltd., Ikeda-shi, Osaka (JP)
(72) Inventor: Nomura, Hidemasa, Ikeda-shi, Osaka (JP)
(74) Representative: Hoffmeister, Helmut, Dr. Dipl.-Phys.

(56) References cited:
- EP-A- 0 516 512
- DE-A- 3 913 529
- FR-A- 2 738 535
- US-A- 4 475 763

## Description

This invention relates to a seat mounting structure for a motorcar, with connecting links each having one end thereof pivotably connected to a seat cushion, and the other end pivotably connected to the car floor. When the seat cushion is in a use position, connecting points between the connecting links and the seat cushion are disposed rearwardly of connecting points between the connecting links and the floor (see, for example, DE 39 13 529 A1, corresponding to the preamble of claim 1).

According to the above seat mounting structure, a movement of the seat cushion pivots the connecting links relative to both the seat cushion and the floor. In this way, the seat cushion is switchable forward from the use position to a contained position. This makes a seating space available for a different use, such as for accommodating articles.

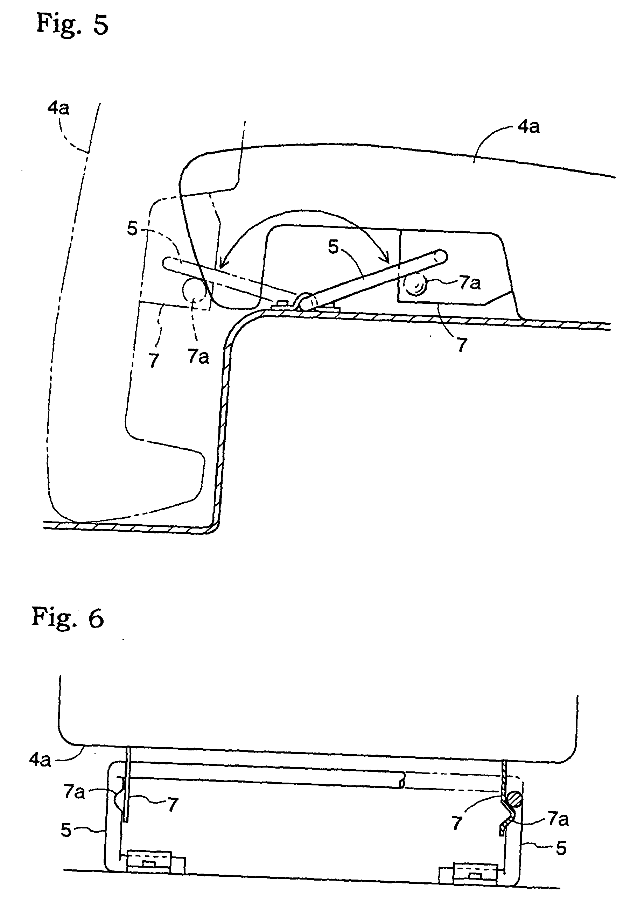

When a car employing this type of seat mounting structure is braked, for example, a force acts in the direction to move the seat cushion forward. Then, the seat cushion tends to swing about the connecting points between the connecting links and the floor. It is necessary to prevent the seat cushion lifting from the use position as a result of this pivotal movement. For this purpose, in the conventional seat mounting structure noted above, as shown in Figs. 5 and 6, for example, the seat cushion is provided with an engaging element biased to engage the connecting links, the engaging element being disengageable against the biasing force.

That is, a seat cushion 4a includes link attaching elements 7 for coupling connecting links 5 to the seat cushion 4a. Each attaching element 7 has a protuberant engaging portion 7a. When the seat cushion 4a is placed in a use position, the engaging portions 7a contact lower positions of the connecting links 5 to restrain a relative pivotal movement of connecting links 5 and link attaching elements 7.

Thus, the seat cushion 4a is restrained from becoming lifted by a force acting forward.

When switching the seat cushion 4a from the use position to the contained position or vice versa, the seat cushion 4a may simply be moved to pivot the connecting links 5 and link attaching elements 7 relative to each other. Then, the engaging portions 7a are elastically deformed while contacting the connecting links 5, and over-ride the connecting links 5 in the direction of pivotal movement and into or out of engagement therewith. Thus, the engaging portions 7a may be placed in a release state for allowing an unrestricted movement of seat cushion 4a, and in an engaging state for restraining lifting of seat cushion 4a in the use position.

That is, a switch between engaging state and release state is made simply and easily by moving the seat cushion 4a.

Conventionally, to prevent the seat cushion reliably from becoming lifted by a strong force occurring when the car stops suddenly, for example, the engagement between the engaging portions and connecting links must be strengthened so that such strong force will not result in the engaging portions easily overriding the connecting links. Where this engagement relies on an elastic biasing force, for example, a strong resistance is applied in an operation to disengage the engaging portions from the connecting links. Thus, a strong force is required to switch the seat cushion between the different positions.

The above-mentioned prior art document DE 39 13 529 A1 discloses a rear seat structure having a link extending between the seat cushion and the floor with two hinges, one fixed with the floor and one fixed with the seat cushion in a forward direction. In a use position, the seat cushion hinge is in a lower position than the floor hinge and positioned between the floor hinge and the backrest. This diminishes the risk of the seat lifting from the use position in case of a sudden negative acceleration. In preferred embodiments, the link is additionally secured in the use position by a snapping element connecting the link on the seat hinge with the floor to avoid noise during travelling.

The object of this invention is to provide a seat mounting structure for a motorcar, which reliably restrains lifting of a seat cushion from a use position, and allows the seat cushion to be switched easily between the use position and a contained position.

The above object is fulfilled according to this invention as defined in claim 1, i.e. a seat mounting structure for a motorcar having connecting links extending between a seat cushion and a floor of the motorcar, each connecting link being pivotably connected at one end thereof to the seat cushion, and at the other end to the floor, each connecting link having a connecting point to the seat cushion disposed rearwardly of a connecting point to the floor when the seat cushion is in a use position, the connecting point of the connecting link to the seat cushion being disposed below the connecting point to the floor when the seat cushion is in the use position, characterised in that the seat cushion includes elastically deformable shape-retaining wire rods having wire rod extensions each extending from one of shape-retaining portions thereof, and disposed forwardly of the connecting point of the connecting link to the floor, the wire rod extensions having a contact element attached to projecting ends thereof for contacting a stationary element fixed to the floor, in a direction to restrain lifting of the seat cushion, said contact element contacting an underside of said stationary element.

With the above construction, when a force as noted herein before acts on the seat cushion in the use position, a component of the force acts in a direction to swing each connecting link downward about the connecting point to the floor side. Despite the force noted above, this component restrains the connecting link from pivoting upward about the connecting point to the floor side to prevent lifting of the seat cushion.

By setting a proper level difference between the two connecting points of each connecting link, taking the strength of such force into account, an upward pivotal movement of the connecting link is prevented reliably even when a strong force is applied, since the component of the force will be strong also. Thus, the seat cushion is reliably prevented from becoming lifted. The seat cushion may be switched between use position and contained position without the trouble of effecting or cancelling the restraint on its lifting, and without a strong resistance due to the restraint on the lifting. The seat cushion in the use position is effectively prevented from lifting even by such a force produced when the car is stopped suddenly.

Thus, the seat cushion does not become lifted easily even when the brakes are applied suddenly, since the connecting links are restrained from pivoting upward.

Moreover, when the seat cushion is moved to the contained position or returned to the use position, no special trouble is required to release or impose the restraint an lifting. Such a seat switching operation may be carried out free of a resistance due to the restraint on lifting. The switching may be made simply by moving the seat cushion in an easy and effortless way.

With this construction, a force acting in a direction to move the seat cushion in the use position rearward may have a component to swing each connecting link upward about the connecting point to the floor side because of the arrangement of the connecting points. Then, the seat cushion is prevented from lifting by the contact element contacting the stationary element. In this state, even though the contact element contacts the stationary element when the seat cushion is switched between the use position and contained position, the shape-retaining wire rods d become elastically deformed so that the contact is hardly obstructive to the movement or positional adjustment of the seat cushion. Thus, only the addition made to the portions presenting little obstruction to the movement of the seat cushion effectively restrains the seat cushion from lifting when a force is applied to move the seat cushion rearward.

Other features and advantages of this invention will be apparent from the following description of the embodiment to be taken with reference to the drawings. 1 In the drawings:
Fig. 1 is a side view of a rear seat unit of a motorcar;
Fig. 2 is a plan view, partly in section, of rear seats of the motorcar;
Fig. 3 is a side view of the seats in a contained position;
Fig. 4 is a side view of a seat cushion mounting structure according to this invention;
Fig. 5 is a side view of a conventional seat cushion mounting structure; and
Fig. 6 is a front view of the conventional seat cushion mounting structure.

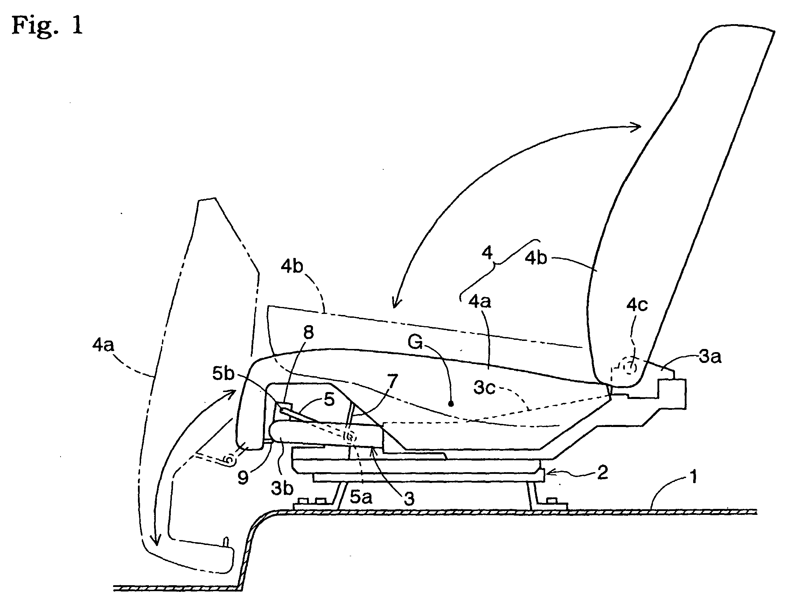

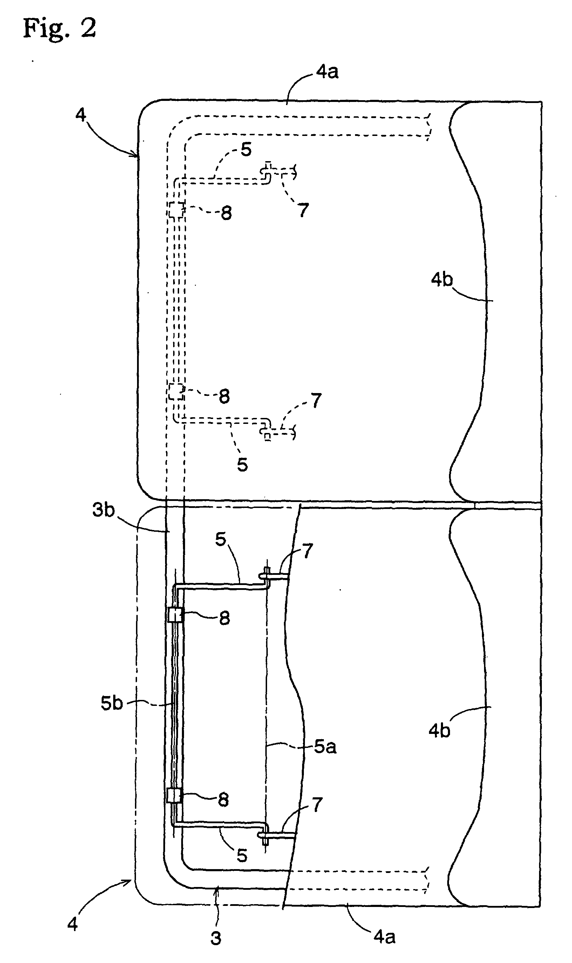

As shown in Figs. 1 and 2, a motorcar has a rear seat unit disposed on a floor surface in a rearward region thereof. The rear seat unit includes a seat support assembly 2 fixed to the floor surface 1. The seat support assembly 2 includes a seat support 3 for supporting a pair of seats 4 attached to right and left side portions thereof. Each seat 4 has a seat cushion 4a and a backrest 4b.

The backrest 4b of each of the right and left seats 4 is attached at a lower end thereof to a support portion 3a at the rear end of seat support 3, to be pivotable about an axis 4c extending transversely of the car.

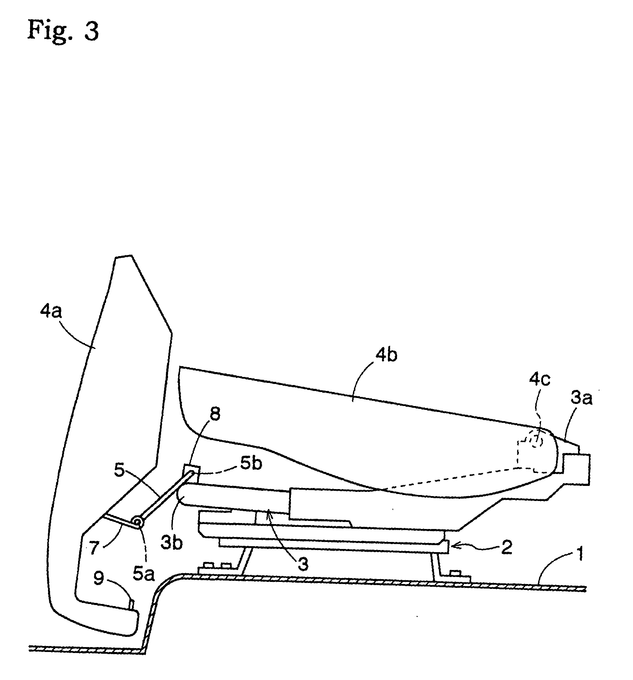

Thus, each of the right and left backrests 4b is pivotable about the axis 4c to switch between a use position erected on the seat support as shown in a solid line in Fig. 1, and a contained position prostrate over the seat support assembly 2 as shown in a two-dot chain line in Fig. 1 and in a solid line in Fig. 3.

The seat support 3 is formed by bending a round pipe to define a front support portion 3b extending transversely of the car for supporting the seat cushions 4a. The front support portion 3b has a support structure for supporting right and left sides of the seat cushion 4a of each of the right and left seats 4 through connecting links 5.

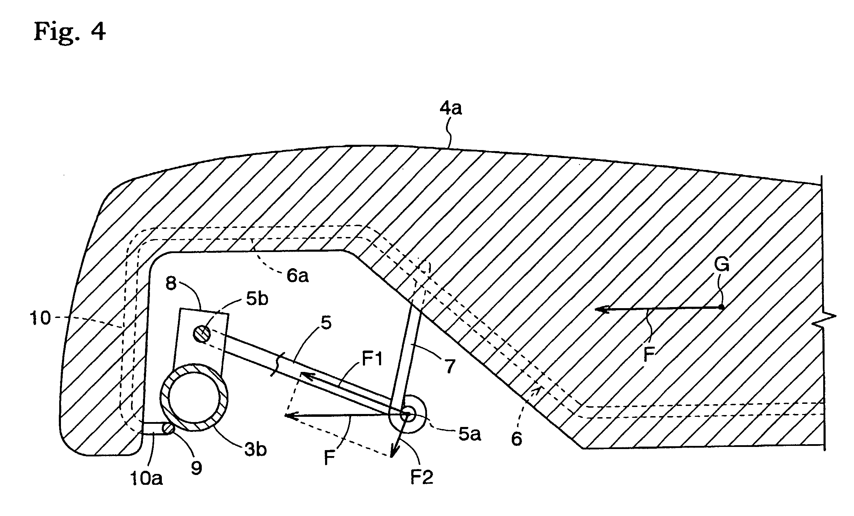

Referring to Figs. 2 and 4, each seat cushion 4a has shape-retaining wire rods 6 disposed in the bottom thereof. Two arm-like link attaching elements 7 extend from the wire rods 6 to project under the seat cushion 4a. Thus, each link attaching element 7 is fixed at one end thereof to the seat cushion 4a. The front support portion 3b of seat support 3 has link attaching elements 8 welded thereto and thus disposed on the floor side. The connecting links 5 extend between the link attaching elements 7 and 8, respectively, to connect the seat cushion 4a to the floor side. Each seat cushion 4a further includes an engaging element 9 projecting from the lower surface at the front thereof. The components described above constitute the mounting structure.

Each connecting link 5 is connected at one end thereof to the link attaching element 7 on the seat side to be pivotable about an axis 5a extending transversely of the seat 4, and at the other end to the link attaching element 8 on the floor side to be pivotable about an axis 5b extending transversely of the seat 4.

As shown in Fig. 2, the right and left connecting links 5 of each of the right and left mounting structures are formed by bending a single round bar.

End portions of the round bar define the ends of right and left connecting links 5 rotatably connected to the link attaching elements 7 on the seat side, and extend transversely of the seat. An intermediate portion of the round bar extends transversely of the seat, and are rotatably connected to the right and left link attaching elements 8 on the floor side of the right and left connecting links 5. Portions of the round bar between the end portions defining the ends of right and left connecting links 5 and the intermediate portion of the bar extend perpendicular to the intermediate portion.

Each of the right and left seat cushions 4a may be swung longitudinally of the car about the front end of the seat cushion 4a. Then, the right and left connecting links 5 pivot relative to the link attaching elements 8 on the floor side, and relative to the link attaching elements 7 on the seat side. In this way, each seat cushion 4a is switchable between a use position shown in a solid line in Fig. 1, and a contained position shown in a two-dot chain line in Fig. 1 and a solid line in Fig. 3.

Specifically, when each seat cushion 4a is in the use position, the axis 5a acting as connecting points on the seat cushion side of the connecting links 5 is disposed rearwardly of the axis 5b acting as connecting points on the floor side, the front end of seat cushion 4a is supported by the front support portion 3b of seat support 3 through the link attaching elements 7 on the seat side, connecting links 5 and link attaching elements 8 on the floor side, and the rear end of the seat cushion 4a rests on a rearward portion 3c of the seat support 3.

In this position, the rear end of seat cushion 4a lies under the lower end of backrest 4b in the use position. Thus, the backrest 4b holds the rear end of seat cushion 4a against a lifting force.

When each seat cushion 4a is in the contained position, the axis 5a on the seat side is disposed forwardly of the axis 5b on the floor side. In this position, the seat cushion 4a stands with its forward end down on the floor forwardly of seat support assembly 2.

Each of the right and left connecting links 5 of each seat cushion 4a has a construction as shown in Fig. 4.

Specifically, when the seat cushion 4a is placed in the use position, the axis 5a acting as connecting points on the seat cushion side of the connecting links 5 is disposed below the axis 5b acting as connecting points on the floor side. When the car is braked, a force acts on the seat cushion 4a in a direction to move the seat cushion 4a forward. A level difference between the two axes 5a and 5b are set by taking into account the magnitude of this forwardly urging force F and the height of the center of gravity of seat cushion 4a with respect to the axis 5b on the floor side.

That is, the force F acting on the center of gravity G of seat cushion 4a generates a moment to raise the front end of seat cushion 4a about the axis 5b on the floor side. However, the force F acting on the center of gravity G is applied to the axis 5a on the seat cushion side of connecting links 5. This force F applies, to each connecting link 5, a first component F1 acting axially of connecting link 5 and a second component F2 in a direction perpendicular to the axis of connecting link 5. Thus, the second component F2 acts in the direction to swing the connecting link 5 about the axis 5b on the floor side. As a result, despite the moment generated as noted above, the connecting links 5 are restrained from pivoting upward about the axis 5b on the floor side to prevent lifting of the front end of seat cushion 4a.

When a force is subsequently applied to displace the center of gravity G of seat cushion 4a above the axis 5b on the floor side of connecting links 5, the seat cushion 4a as a whole is urged to rise about the axis 5b on the floor side. However, the seat cushion 4a, actually, will not become lifted since the rear end of seat cushion 4a is caught under the lower end of backrest 4b.

As shown in Figs. 4 and so on, each seat cushion 4a contains shape-retaining portions 6a for retaining the shape thereof. Wire elements 10 extend from forward ends of shape-retaining portions 6a to provide the engaging element 9 noted hereinbefore. Specifically, the shape-retaining portions 6a have a pair of right and left arm portions 10a extending downward from the forward ends thereof inside the seat cushion 4a. The arm portions 10a project rearward from the front end of seat cushion 4a in the use position. The contact element 9 is in the form of a cross wire rod connected to and extending between the projecting ends of arm portions 10a transversely of the seat cushion 4a. In the use position of seat cushion 4a, the wire elements 10 extend downward from the shape-retaining portions 6a of wire rods 6, through regions forwardly of the connecting points between the link attaching elements 8 on the floor side and the connecting links 5, whereby the contact element 9 is located under the front support portion 3b of seat support 3.

As a result, when a force acts in a direction to move the seat cushion 4a in the use position rearward, a component of force is applied to each connecting link 5 in a direction to swing the connecting link 5 upward about the axis 5b on the floor side, tending to lift the front end of seat cushion 4a. However, with this construction, the contact element 9 contacts the lower position of the front support portion 3b of seat support body 3, whereby the front support portion 3b acts as a stopper to prevent the seat cushion 4a from lifting further upward.

That is, the seat cushion 4a of each of the right and left seats 4 is switchable between use position and contained position only by swinging the seat cushion 4a about the front end thereof. The seat 4 is in a condition for seating a passenger when the seat cushion 4a and backrest 4b are in the use position. Even when, in this state, a force acts in the direction to move the seat cushion 4a forward or rearward, the seat cushion 4a is restrained from becoming lifted, with the axis 5a of connecting links 5 disposed rearwardly of and below the axis 5b, and the contact element 9 contacting the front support portion 3b of seat support 3. Thus, the seat 4 may be used in the condition that the front end of seat cushion 4a does not easily become lifted. The seat 4 is placed in a contained condition by switching the backrest 4b and seat cushion 4a to the contained positions. In this condition, the seating space over the seat support assembly 2 may be used for accommodating articles, for example.

The seat support assembly 2 allows the seat support 3 to be slid relative to the floor to adjust the seats 4 forwardly or rearwardly. This invention is applicable also where this seat support assembly 2 is not employed, and the seats 4 are mounted on the floor not to be adjustable forwardly or rearwardly. Thus, the front support portion 3a of seat support 3 is called herein a stationary member 3a fixed to the floor.

## Claims

1. A seat mounting structure for a motorcar having connecting links (5) extending between a seat cushion (4a) and a floor of the motorcar, each connecting link (5) being pivotably connected at one end thereof to the seat cushion (4a) and at the other end to the floor, each connecting link (5) having a connecting point to the seat cushion (4a) disposed rearwardly of a connecting point to the floor when the seat cushion (4a) is in a use position, said connecting point of said connecting link (5) to said seat cushion (4a) being disposed below said connecting point to said floor when said seat cushion (4a) is in said use position,
**characterised in that** said seat cushion (4a) includes elastically deformable shape-retaining wire rods (6) having wire rod extensions (10) each extending from one shape-retaining portion (6a) thereof, and disposed forwardly of said connecting point of said connecting link (5) to said floor, said wire rod extensions (10) having a contact element (9) attached to projecting ends thereof for contacting a stationary element (3b) fixed to said floor, in a direction to restrain lifting of said seat cushion (4a), said contact element (9) contacting an underside of said stationary element (3b).

## Patentansprüche

1. Sitzvorrichtung für ein Kraftfahrzeug mit Verbindungselementen (5), die sich zwischen einem Sitzpolster (4a) und einem Boden des Kraftfahrzeugs erstrecken, wobei jedes Verbindungselement (5) an einem Ende drehbar mit dem Sitzpolster (4a) und am anderen Ende mit dem Boden verbunden ist, und wobei jedes Verbindungselement (5) einen Verbindungspunkt mit dem Sitzpolster (4a) hat, der gegenüber einem Verbindungspunkt zum Boden nach hinten versetzt ist, wenn das Sitzposter (4a) in einer Gebrauchsposition ist, und bei der der Verbindungspunkt des Verbindungselementes (5) zu dem Sitzpolster (4a) sich unterhalb des Verbindungspunktes zum Boden befindet, wenn das Sitzpolster (4a) in Gebrauchsposition ist,
**dadurch gekennzeichnet, dass** das Sitzpolster (4a) elastisch verformbare, formwahrende Drahtstäbe (6) enthält, die Drahtstab-Verlängerungen (10) besitzen, die sich jeweils von einem formwahrenden Bereich (6a) erstrecken, und die vor dem Verbindungspunkt des Verbindungselementes (5) zum Boden angebracht sind, wobei die Drahtstab-Verlängerungen (10) ein Kontaktelement (9) an ihren herausragenden Enden tragen, um ein stationäres Element (3b), das am Boden befestigt ist, in einer Richtung, um das Abheben des Sitzpolsters (4a) zu verhindern, zu kontaktieren, wobei das Kontaktelement (9) eine Unterseite des stationären Elementes (3b) berührt.

## Revendications

1. Structure de montage de siège pour une automobile, qui inclut des bielles de connexion (5) qui s'étendent entre un coussin (4a) de siège et le plancher de l'automobile, chaque bielle de connexion (5) étant connectée à pivotement par sa première extrémité au coussin (4a) de siège et par son autre extrémité au plancher, chaque bielle de connexion (5) comportant un point de connexion avec le coussin (4a) de siège disposé en arrière d'un point de connexion avec le plancher lorsque le coussin (4a) de siège est en position d'utilisation, ledit point de connexion de ladite bielle de connexion (5) audit coussin (4a) de siège étant disposé au-dessous dudit point de connexion avec ledit plancher lorsque ledit coussin (4a) de siège est dans ladite position d'utilisation,
**caractérisée en ce que** ledit coussin (4a) de siège inclut des tiges élastiquement déformables (6) de maintien de forme, en fil rond, qui comportent des extensions (10) en tiges de fil rond qui s'étendent chacune à partir d'une fraction (6a) de maintien de forme de cette tige et sont disposées en avant dudit point de connexion de ladite bielle de connexion (5) audit plancher, lesdites extensions (10) de tiges en fil rond portant chacune un élément de contact (9) attaché à une extrémité en saillie de cette tige pour venir en contact avec un élément stationnaire (3b) fixé audit plancher, dans une direction apte à empêcher un soulèvement dudit coussin (4a) de siège, ledit élément de contact (9) venant au contact d'un côté inférieur dudit élément stationnaire (3b).
